(19) Europäisches Patentamt
European Patent Office
Office européen des brevets

(11) **EP 2 395 063 A2**

(12) **EUROPEAN PATENT APPLICATION**

(43) Date of publication:
**14.12.2011 Bulletin 2011/50**

(51) Int Cl.:
***C09J 7/02*** (2006.01)

(21) Application number: **11161621.5**

(22) Date of filing: **08.04.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **09.04.2010 JP 2010090240**<br>　　　　　　**07.04.2011 JP 2011085099**<br><br>(71) Applicant: **Nitto Denko Corporation**<br>**Ibaraki-shi, Osaka 567-8680 (JP)** | (72) Inventors:<br>　• **Higuchi, Naoaki**<br>　　**Ibaraki-shi Osaka 567-8680 (JP)**<br>　• **Nakashima, Tooru**<br>　　**Ibaraki-shi Osaka 567-8680 (JP)**<br>　• **Yamanaka, Eiji**<br>　　**Ibaraki-shi Osaka 567-8680 (JP)**<br><br>(74) Representative: **Grünecker, Kinkeldey,**<br>**Stockmair & Schwanhäusser**<br>**Leopoldstrasse 4**<br>**80802 München (DE)** |

(54) **Pressure-sensitive adhesive composition and acrylic pressure-sensitive adhesive tape**

(57)　A pressure-sensitive adhesive composition contains: an acrylic polymer (A); a (meth)acrylic polymer (B) whose mass average molecular weight (Mw) is such that $1000 \leq Mw < 30000$; and a heat-expandable microsphere (C).

## Fig. 1

EP 2 395 063 A2

**Description**

The present invention relates to a pressure-sensitive adhesive composition and an acrylic pressure-sensitive adhesive tape that can be easily teared off because the adhesive force thereof is reduced by heating at peeling-off, while high adhesive force is being maintained in a joined state.

2. Description of the Related Art

Conventionally, acrylic pressure-sensitive adhesive tapes having an acrylic pressure-sensitive adhesive layer have been widely used because they are excellent in light resistance, weather resistance, and oil resistance, etc., and also excellent in adhesive properties, such as adhesive force and cohesive force, etc, and aging resistance, such as heat resistance and weather resistance, etc. In particular, because acrylic pressure-sensitive adhesive tapes have the above properties, they are widely used, as joining materials, in various industrial fields, such as home electronic appliances, automobiles, and building materials. Accordingly, the acrylic pressure-sensitive adhesive tapes are required to be adhered to various adherends (objects to be joined) including: metallic materials, such as stainless steel and aluminum; various plastic materials, such as polyethylene, polypropylene, polystyrene, ABS, and polycarbonate; and glass materials, etc., with high reliability. On the other hand, with the growing environmental awareness in recent years, there are many demands for saving resources and recycling. Accordingly, the acrylic pressure-sensitive adhesive tapes are required to have a property that they are excellent in peeling-off property or tearing-off property occurring by heating, etc., while sufficient adhesive force is being demonstrated when joined to an adherend.

Under such a situation, although conventional acrylic pressure-sensitive adhesive tapes (Japanese Patent Publication No. S57-17030 (US Patent No. 4223067), Japanese Patent Application Publications Nos. 1995-48549, 2001-212900, 2002-088320, 2002-003800, 2002-121505, and 2004-018761) have high joint reliability due to high joint strength, the high joint strength conversely makes it difficult to disjoin and tear off joint portions.

Therefore, a pressure-sensitive adhesive tape that is intended to achieve excellent adhesive force in a normal state and easy peeling-off property occurring by heating is proposed (Japanese Patent Application Publication No. 2008-120903).

However, in the conventional acrylic pressure-sensitive adhesive tapes, there is the problem that, when attached to a metallic material, such as stainless plate, etc., the adhesive force is increased over time, and accordingly easy peeling-off property occurring when heated cannot be achieved. Therefore, it is demanded that peeling-off property or tearing-off property occurring by heating is improved while the adhesiveness to a metallic material is being maintained.

The present invention has been made in view of such an issue, and a purpose of the invention is to provide a pressure-sensitive adhesive composition or an acrylic pressure-sensitive adhesive tape in which peeling-off property or tearing-off property occurring by heating is improved while the high adhesiveness to a metallic material is being maintained.

An embodiment of the present invention is a pressure-sensitive adhesive composition. The pressure-sensitive adhesive composition comprises: an acrylic polymer (A); a (meth)acrylic polymer (B) whose mass average molecular weight (Mw) is such that $1000 \leq Mw < 30000$; and a heat-expandable microsphere (C).

According to the pressure-sensitive adhesive composition of the above embodiment, peeling-off property or tearing-off property occurring by heating can be improved while the adhesive force to a metallic material, such as stainless plate, etc., is being maintained.

The acrylic polymer (A) in the pressure-sensitive adhesive composition of the above embodiment may contain the structural unit of a (meth)acrylic acid alkyl ester as a major component.

Another embodiment of the present invention is an acrylic pressure-sensitive adhesive tape. The acrylic pressure-sensitive adhesive tape comprises a pressure-sensitive adhesive layer containing the pressure-sensitive adhesive composition according to either of the aforementioned embodiments.

Still another embodiment of the present invention is an acrylic pressure-sensitive adhesive tape. The acrylic pressure-sensitive adhesive tape comprises: a core layer and a surface layer provided on one side of the core layer or on each of the sides of the core, in which the core layer contains an acrylic polymer (D) and the surface layer contains the pressure-sensitive adhesive composition according to either of the aforementioned embodiments. The aforementioned core layer may further contain a fine particle (E) and/or a bubble (F). In the acrylic pressure-sensitive adhesive tape according to the aforementioned embodiments, the adhesive force occurring when, after the tape has been left at 23°C for 30 minutes after adhered to a SUS plate, the tape is peeled off in 180° peeling-off direction at a tension speed of 50 mm/min, may be 20 N/25 mm or more.

Embodiments will now be described, by way of example only, with reference to the accompanying drawing, which are meant to be exemplary, not limiting, in which:

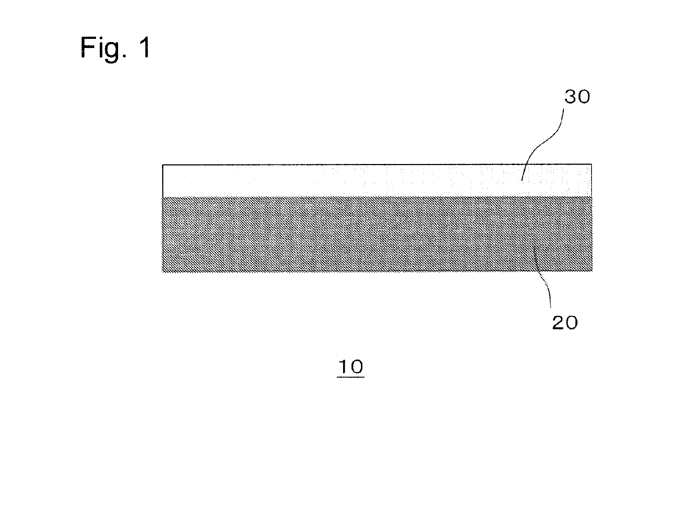

Fig. 1 is a schematic sectional view illustrating the configuration of an acrylic pressure-sensitive adhesive tape according to Embodiment 2.

The invention will now be described by reference to the preferred embodiments. This does not intend to limit the scope of the present invention, but to exemplify the invention.

Hereinafter, embodiments of the present invention will be described.

(Embodiment 1)

An acrylic pressure-sensitive adhesive tape according to Embodiment 1 is a pressure-sensitive adhesive tape of a single layer having a pressure-sensitive adhesive layer with an easy tearing-off property. The pressure-sensitive adhesive layer with an easy tearing-off property is formed of the following pressure-sensitive adhesive composition A.

[Pressure-Sensitive Adhesive Composition A]

The pressure-sensitive adhesive composition A contains: an acrylic polymer (A); a (meth)acrylic polymer (B) whose mass average molecular weight (Mw) is such that $1000 \leq Mw < 30000$; and a heat-expandable microsphere (C). The acrylic polymer (A) mainly functions as a pressure-sensitive adhesive composition and the (meth) acrylic polymer (B) whose mass average molecular weight (Mw) is such that $1000 \leq MW < 30000$ mainly functions as a tackifier resin. The heat-expandable microsphere (C) mainly contributes to provision of easy peeling-off property occurring when heated.

The acrylic polymer (A) contains, as a monomer unit, 50% by mass or more of (meth) acrylic acid alkyl ester having a linear or branched-chain $C_{1-20}$ alkyl group. In the acrylic polymer (A), the (meth) acrylic acid alkyl ester having $C_{1-20}$ alkyl group may be used alone or in combination of two or more thereof. The acrylic polymer (A) can be obtained by polymerizing (for example, solution polymerization, emulsion polymerization, or UV polymerization) the (meth) acrylic acid alkyl ester along with a polymerization initiator.

The ratio of the (meth)acrylic acid alkyl ester having a $C_{1-20}$ alkyl group is within a range of 50% by mass or more to 99. 9% by mass or less based on the total mass of the monomer components for preparing the acrylic polymer (A), preferably within a range of 60% by mass or more to 95% by mass or less, and more preferably within a range of 70% by mass or more to 93% by mass or less.

Examples of the (meth) acrylic acid alkyl ester having a $C_{1-20}$ alkyl group include, for example: (meth) acrylic acid $C_{1-20}$ alkyl esters, such as (meth)acrylic acid methyl, (meth)acrylic acid ethyl, (meth)acrylic acid propyl, (meth) acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth) acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth) acrylic acid octadecyl, (meth) acrylic acid nonadecyl, and (meth) acrylic acid eicosyl, etc.; preferably (meth) acrylic acid $C_{2-14}$ alkyl ester; and more preferably (meth) acrylic acid $C_{2-10}$ alkyl ester, etc. Herein, the " (meth) acrylic acid alkyl ester" means an acrylic acid alkyl ester and/or a methacrylic acid alkyl ester, and all of the " (meth) ..." expressions have the same meaning.

Examples of the (meth)acrylic acid ester other than the (meth)acrylic acid alkyl ester include, for example:

(meth)acrylic acid esters having a alicyclic hydrocarbon group, such as cyclopentyl(meth)acrylate, cyclohexyl(meth) acrylate, and isobornyl(meth)acrylate, etc.; (meth)acrylic acid esters having an aromatic hydrocarbon group, such as phenyl(meth)acrylate, etc.; and (meth)acrylic acid esters obtained from an alcohol derived from a terpene compound, etc.

For the purpose of modifying cohesive force, heat resistance, and cross-linking property, the acrylic polymer (A) may contain, if necessary, another monomer component (copolymerizable monomer) that is copolymerizable with the (meth)acrylic acid alkyl ester. Accordingly, the acrylic polymer (A) may contain a copolymerizable monomer along with the (meth)acrylic acid alkyl ester as a major component. A monomer having a polar group can be preferably used as the copolymerizable monomer.

Specific examples of the copolymerizable monomer include: carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid, etc.; hydroxyl group-containing monomers, such as (meth) acrylic acid hydroxyalkyls including (meth) acrylic acid hydroxyethyl, (meth)acrylic acid hydroxypropyl, (meth)acrylic acid hydroxybutyl, (meth) acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl)methyl methacrylate, etc.; acid anhydride group-containing monomers, such as maleic acid anhydride, and itaconic acid anhydride, etc.; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalene sulfonic acid, etc.; phosphate group-containing monomers, such as 2-hydroxyethyl acryloyl phosphate, etc.;

(N-substituted)amide monomers, such as (meth)acrylamide, N,N-dimethyl(meth)acrylamide, N,N-diethyl(meth)acrylamide, N-isopropyl(meth)acrylamide, N-butyl(meth)acrylamide, N-methylol(meth)acrylamide, N-methylol propane (meth) acrylamide, N-methoxymethyl(meth)acrylamide, and

N-butoxymethyl(meth)acrylamide, etc.; succinimide monomers, such as N-(meth)acryloyloxy methylene succinimide, N-(meth)acryloyl-6-oxy hexamethylene succinimide, and N-(meth)acryloyl-8-oxy hexamethylene succinimide, etc.; maleimide monomers, such as N-cyclohexyl maleimide, N-isopropylmaleimide, N-lauryl maleimide, and N-phenyl maleimide, etc.; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide, etc.; vinyl esters, such as vinyl acetate and vinyl propionate, etc.; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole,

N-(meth)acryloyl-2-pyrrolidone, N-(meth)acryloylpiperidine, N-(meth)acryloylpyrrolidine, and N-vinyl morpholine, etc.; N-vinyl carboxylic acid amides; lactam monomers, such as N-vinyl caprolactam, etc.; cyanoacrylate monomers, such as acrylonitrile and methacrylonitrile, etc.; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl, etc.; (meth)acrylic acid alkoxy alkyl monomers, such as (meth)acrylic acid methoxyethyl, and (meth) acrylic acid ethoxyethyl, etc.; styrene monomers, such as styrene and α-methylstyrene, etc.; epoxy group-containing acrylic monomers, such as (meth)acrylic acid glycidyl, etc.; glycol acrylic ester monomers, such as (meth)acrylic acid polyethylene glycol, (meth)acrylic acid polypropylene glycol, (meth)acrylic acid methoxy ethylene glycol, and (meth) acrylic acid methoxy polypropylene glycol, etc.; acrylic acid ester monomers having a heterocycle, halogen atom, silicon atom, or the like, such as (meth)acrylic acid tetrahydrofurfuryl, fluoride(meth)acrylate, and silicone(meth)acrylate, etc.; olefin monomers, such as isoprene, butadiene, and isobutylene, etc. ; vinyl ether monomers, such as methyl vinyl ether, and ethyl vinyl ether, etc.; thioglycolic acid; vinyl esters, such as vinyl acetate, and vinyl propionate, etc.; aromatic vinyl compounds such as styrene, and vinyl toluene, etc.; olefins or dienes, such as ethylene, butadiene, isoprene, and isobutylene, etc.; vinyl ethers, such as vinyl alkyl ether, etc.; vinyl chloride; (meth)acrylic acid alkoxy alkyl monomers, such as (meth) acrylic acid methoxyethyl and (meth)acrylic acid ethoxyethyl, etc.; sulfonic acid group-containing monomers such as vinyl sulfonate sodium, etc.; imide group-containing monomers, such as cyclohexyl maleimide and isopropyl maleimide, etc.; isocyanate group-containing monomers, such as 2-isocyanate ethyl(meth)acrylate, etc.; fluorine atom-containing (meth)acrylates; and silicon atom-containing (meth)acrylates, etc. These copolymerizable monomers can be used alone or in combination of two or more thereof.

When the acrylic polymer (A) contains a copolymerizable monomer along with the (meth) acrylic acid alkyl ester as a major component, carboxyl group-containing monomers can be preferably used. Among them, an acrylic acid can be preferably used. The use amount of the copolymerizable monomer is not particularly limited, but the copolymerizable monomer can be usually contained in an amount within a range of 0.1 to 30% by mass based on the total mass of the monomer components for preparing the acrylic polymer (A), preferably in an amount within a range of 0.5 to 20% by mass, and more preferably in an amount within a range of 1 to 15% by mass.

By containing the copolymerizable monomer in an amount of 0.1% by mass or more, a decrease in the cohesive force of the acrylic pressure-sensitive adhesive tape can be prevented and high shear force can be obtained. Further, by making the content of the copolymerizable monomer to be 30% by mass or less, it can be prevented that the cohesive force may become too high and the tackiness at normal temperature (25°C) can be improved.

A polyfunctional monomer may be contained, if necessary, in the acrylic polymer (A) in order to adjust the cohesive force of the pressure-sensitive adhesive layer to be formed.

Examples of the polyfunctional polymer include, for example: (poly)ethylene glycol di(meth)acrylate, (poly) propylene glycol di(meth)acrylate, neopentyl glycol di(meth)acrylate, pentaerythritol di(meth)acrylate, pentaerythritol tri (meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc. Among them, trimethylolpropane tri(meth)acrylate, hexanediol di(meth)acrylate, and dipentaerythritol hexa(meth)acrylate can be preferably used. The polyfunctional (meth) acrylates can be used alone or in combination of two or more thereof.

The use amount of the polyfunctional monomer is changed depending on the molecular weight or the number of functional groups thereof, but the polyfunctional monomer is added in an amount within a range of 0.01 to 3.0% by mass based on the total mass of the monomer components for preparing the acrylic polymer (A), preferably in an amount within a range of 0.02 to 2.0% by mass, and more preferably in an amount within a range of 0.03 to 1.0% by mass.

If the use amount of the polyfunctional monomer exceeds 3.0% by mass based on the total mass of the monomer components for preparing the acrylic polymer (A) , for example, the cohesive force of the pressure-sensitive adhesive layer may become too high and accordingly there are sometimes the cases where the adhesive force may be decreased. On the other hand, the use amount thereof is below 0.01% by mass, for example, there are sometimes the cases where the cohesive force of the pressure-sensitive adhesive layer may be decreased.

<Polymerization Initiator>

In preparing the acrylic polymer (A), the acrylic polymer (A) can be easily formed by a curing reaction using heat or ultraviolet rays with the use of a polymerization initiator, such as thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators [for example, 2,2'-azobisisobutyronitrile,

2,2'-azobis-2-methylbutyronitrile,

2,2'-azobis(2-methylpropionic acid)dimethyl,

4,4'-azobis-4-cyanovalerianic acid, azobis isovaleronitrile,

2,2'-azobis(2-amidinopropane)dihydrochloride,

2,2'-azobis[2-(5-methyl-2-imidazoline-2-yl)

propane]dihydrochloride,

2,2'-azobis(2-methylpropionamidine)disulfate, and 2,2'-azobis (N,N'-dimethyleneisobutylamidine)dihydrochloride, etc.]; peroxide polymerization initiators (for example, dibenzoyl peroxide, t-butyl permaleate, and lauroyl peroxide, etc.); and redox polymerization initiator, etc.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, $\alpha$-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [made by Ciba Speciality Chemicals Inc., product name: IRGACURE 651], and anisole methyl ether, etc. Specific examples of the acetophenone photo-polymerization initiator include, for example: 1-hydroxycyclohexyl phenyl ketone [made by Ciba Speciality Chemicals Inc., product name: IRGACURE 184], 4-phenoxy dichloroacetophenone, 4-t-butyl-dichloroacetophenone, 1-[4-(2-hydroxyethoxy)-phenyl]-2-hydroxy-2-methyl-1-propane-1- one [made by Ciba Speciality Chemicals Inc., product name: IRGACURE 2959], 2-hydroxy-2-methyl-1-phenyl-propane-1-one [made by Ciba Speciality Chemicals Inc., product name: DAROCUR 1173], and methoxy acetophenone, etc. Specific examples of the $\alpha$-ketol photo-polymerization initiator include, for example: 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and $\alpha$-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photo-polymerization initiator include, for example:

bis(2,6-dimethoxybenzoyl)phenylphosphine oxide, bis(2,6-dimethoxybenzoyl)(2,4,4-trimethylpentyl) phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl) phosphine oxide, bis(2,4-dimethoxybenzoyl)(2-methypropane-1-yl) phosphine oxide, bis(2, 4, 6-trimethylbenzoyl)(2,4-dipentoxyphenyl) phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl) phosphine oxide]decane, and tri(2-methylbenzoyl)phosphine oxide, etc.

Among them, bis(2,4,6-trimethylbenzoyl)phenylphosphine oxide [made by Ciba Speciality Chemicals Inc., product name: IRGACURE 819], bis(2,4,6-trimethylbenzoyl)-2,4-di-n-butoxyphenylphosphine oxide, 2,4,6-trimethylbenzoyl diphenylphosphine oxide [made by BASF, product name: Lucirin TPO], and bis(2,6-dimethoxybenzoyl)-2,4,4-trimethylpentylphosphine oxide, are preferred.

The use amount of the photo-polymerization initiator is not particularly limited, but the photo-polymerization initiator is combined in an amount within a range of 0.01 to 5 parts by mass based on 100 parts by mass of the monomer components for preparing the acrylic polymer (A), preferably in an amount within a range of 0. 05 to 3 parts by mass, and more preferably in an amount within a range of 0.08 to 2 parts by mass.

If the use amount of the photo-polymerization initiator is below 0.01 parts by mass, there are sometimes the cases where a polymerization reaction is insufficient. If the use amount thereof exceeds 5 parts by mass, there is the fear that, because the photo-polymerization initiator absorbs an ultraviolet ray, an ultraviolet ray may not reach the inside of the pressure-sensitive adhesive layer, causing a decrease in the polymerization ratio. With the molecular weight of the polymer to be generated becoming small, the cohesive force of the pressure-sensitive adhesive layer to be formed becomes low, and hence part of the pressure-sensitive adhesive layer remains on the film while the layer is being peeled off, and there are sometimes the cases where the film may not be reused. The photo-polymerization initiators may be used alone or in combination of two or more thereof.

Besides the aforementioned polyfunctional monomers, a cross-linking agent can also be used for adjusting the cohesive force. Commonly-used cross-linking agents can be used as the cross-linking agent. Examples of the cross-linking agents include, for example: epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. Among them, the isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane, etc.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N, N, N', N'-tetraglycidyl-m-xylylenediamine, and 1,3-bis(N,N'-diamine glycidyl aminomethyl)cyclohexane, etc.

In the present embodiment, the acrylic polymer (A) can also be prepared as a partial polymer (acrylic polymer syrup) that can be obtained by radiating ultraviolet (UV) rays onto a mixture in which the aforementioned monomer component and the polymerization initiator have been combined, so that part of the monomer is polymerized. The polymerization can also be completed by preparing a pressure-sensitive adhesive composition that has been made by combining the later-described components (B) and (C) into the acrylic polymer syrup and then by coating the pressure-sensitive adhesive composition to be irradiated with UV rays. The mass average molecular weight (Mw) of the acrylic polymer (A) is within a range of 100000 to 5000000.

The (meth) acrylic polymer (B) whose mass average molecular weight (Mw) is 1000 ≤ Mw < 30000 functions as a tackifier resin, and has the advantage that the inhibition of polymerization hardly occurs when UV polymerization is performed after adding the (meth)acrylic polymer (B) into the acrylic polymer (A) (acrylic polymer syrup). Further, by combining with the later-described heat-expandable microsphere (C) along with the (meth)acrylic polymer (B) whose mass average molecular weight (Mw) is such that 1000 ≤ Mw < 30000, peeling-off property and tearing-off property occurring by heating can be achieved to a metallic material.

The addition amount of the (meth) acrylic polymer (B) whose mass average molecular weight (Mw) is such that 1000 ≤ Mw < 30000 is preferably within a range of 5 to 45 parts by mass based on 100 parts by mass of the acrylic polymer (A) , and more preferably within a range of 10 to 30 parts by mass. If the (meth)acrylic polymer (B) is added in an amount more than 45 parts by mass, the elastic modulus of the pressure-sensitive adhesive layer becomes high, and accordingly there are sometimes the cases where the adhesive performance at low temperature may become poor or the adhesiveness may not be demonstrated even at normal temperature. On the other hand, if the addition amount thereof is below 5 parts by mass, there are sometimes the cases where the effects of the (meth)acrylic polymer (B) may not be obtained.

The glass transition temperature (Tg) of the (meth)acrylic polymer (B) is within a range of approximately 20˚C or higher to 300˚C or lower, preferably within a range of approximately 30˚C or higher to 300˚C or lower, and more preferably within a range of approximately 40˚C or higher to 300˚C or lower. It the glass transition temperature (Tg) thereof is below approximately 20˚C, the cohesive force of the pressure-sensitive adhesive layer is decreased at normal temperature or higher, and accordingly there are sometimes the cases where the holding performance or high-temperature adhesive performance may be decreased. In the present invention, the glass transition temperature of each of the materials that can be typically used as the (meth)acrylic polymer (B) is shown in the following table. The glass transition temperature of a material (composition) not shown in the table can be defined as the glass transition temperature represented by the following equation (Fox equation):

$$1/Tg \;=\; \Sigma(W_i/Tg_i)$$

wherein Tg represents the glass transition temperature of the (meth)acrylic polymer (B) (unit: K), $Tg_1$ represents the glass transition temperature at which monomer i forms a homopolymer (unit: K), and $W_1$ represents the mass fraction of the monomer i in the whole monomer components (i = 1, 2,..., n). The above equation is a computation equation applied to the case where the (meth)acrylic polymer (B) is formed of n types of monomers of a monomer 1, monomer 2,..., and monomer n.

[Table 1]

| COMPOSITION OF (METH) ACRYLIC POLYMER (B) | GLASS TRANSITION TEMPERATURE (Tg) [˚C] | REMARKS |
|---|---|---|
| DCPMA | 175 | VALUE DESCRIBED IN BROCHURE DOCUMENT, OR THE LIKE |
| DCPA | 120 | VALUE DESCRIBED IN BROCHURE DOCUMENT, OR THE LIKE |
| IBXMA | 173 | VALUE DESCRIBED IN BROCHURE DOCUMENT, OR THE LIKE |
| IBXA | 97 | VALUE DESCRIBED IN BROCHURE DOCUMENT, OR THE LIKE |
| CHMA | 66 | VALUE DESCRIBED IN BROCHURE DOCUMENT, OR THE LIKE |
| MMA | 105 | VALUE DESCRIBED IN BROCHURE DOCUMENT, OR THE LIKE |

(continued)

| COMPOSITION OF (METH) ACRYLIC POLYMER (B) | GLASS TRANSITION TEMPERATURE (Tg) [˚C] | REMARKS |
|---|---|---|
| ADMA | 250 | VALUE DESCRIBED IN BROCHURE DOCUMENT, OR THE LIKE |
| ADA | 153 | VALUE DESCRIBED IN BROCHURE DOCUMENT, OR THE LIKE |
| IBMA | 31 | VALUE DESCRIBED IN BROCHURE DOCUMENT, OR THE LIKE |
| DCPMA,IBXMA | 174 | COMPUTATION EQUATION (FROM Fox EQUATION) |
| DCPMA/MMA40 | 144 | COMPUTATION EQUATION (FROM Fox EQUATION) |
| DCPMA/MMA60 | 130 | COMPUTATION EQUATION (FROM Fox EQUATION) |
| IBXMA/MMA60 | 130 | COMPUTATION EQUATION (FROM Fox EQUATION) |
| ADMA/MMA | 180 | COMPUTATION EQUATION (FROM Fox EQUATION) |
| ADA/MMA | 132 | COMPUTATION EQUATION (FROM Fox EQUATION) |

The abbreviations in Table 1 represent the following compounds.

DCPMA: Dicyclopentanil methacrylate

DCPA: Dicyclopentanil acrylate

IBXMA: Isobornyl methacrylate

IBXA: Isobornyl acrylate

CHMA: Cyclohexyl methacrylate

MMA: Methyl methacrylate

ADMA: 1-adamanthyl methacrylate

ADA: 1-adamanthyl acrylate

IBMA: Isobutyl methacrylate

The mass average molecular weight of the (meth) acrylic polymer (B) is within a range of 1000 or more to less than 30000, preferably within a range of 1500 or more to less than 20000, and more preferably within a range of 2000 or more to less than 10000. If the mass average molecular weight of the (meth) acrylic polymer (B) is 30000 or more, there are sometimes the cases where the sufficient effect of improving the adhesive performance in the pressure sensitive adhesive tape may not be obtained. On the other hand, if the mass average molecular weight thereof is below 1000, the molecular weight becomes too low, and hence there are sometimes the cases where the adhesive performance and holding performance of the pressure-sensitive adhesive tape may be decreased.

A mass average molecular weight can be measured by polystyrene conversion with the use of the GPC method.

Specifically, a mass average molecular weight can be measured by using the HPLC 8020 made by TOSOH CORPORATION and two TSKge1GMH-H (20) columns and at a flow rate of 0.5 ml/min using tetrahydrofuran solvent.

<Method of Producing (Meth)Acrylic Polymer (B)>

The (meth) acrylic polymer (B) can be produced by, for example, polymerizing a (meth) acrylic acid ester with a solution polymerization method, bulk polymerization method, emulsion polymerization method, suspension polymerization method, mass polymerization method, or the like.

Examples of such a (meth)acrylic acid ester include:

(meth)acrylic acid alkyl esters, such as (meth)acrylic acid methyl, (meth)acrylic acid ethyl, (meth)acrylic acid propyl, (meth)acrylic acid butyl, (meth)acrylic acid isobutyl, (meth)acrylic acid pentyl, (meth)acrylic acid hexyl, (meth)acrylic acid-2-ethylhexyl, (meth)acrylic acid octyl, (meth)acrylic acid nonyl, (meth)acrylic acid decyl, and (meth)acrylic acid dodecyl; esters of (meth)acrylic acids with alicyclic alcohols, such as cyclohexyl(meth)acrylate and (meth) acrylic acid isobornyl; and (meth) acrylic acid aryl esters, such as (meth) acrylic acid phenyl and (meth) acrylic acid benzyl. These (meth) acrylic acid esters can be used alone or in combination of them.

Cyclohexyl methacrylate can be preferably used as a monomer unit that forms the (meth)acrylic polymer (B).

Other than the above component unit of (meth) acrylic acid ester, the (meth)acrylic polymer (B) can also be obtained by copolymerizing a monomer having a polymerizable unsaturated bond that is copolymerizable with (meth) acrylic acid ester.

Examples of the monomer having a polymerizable unsaturated bond that is copolymerizable with (meth) acrylic acid ester include: (meth) acrylic acid alkoxyalkyls, such as (meth) acrylic acid, (meth)acrylic acid methoxyethyl, (meth) acrylic acid ethoxyethyl, (meth)acrylic acid propoxyethyl, (meth)acrylic acid butoxyethyl, and (meth)acrylic acid ethoxypropyl; salts, such as (meth)acrylic acid alkali metal salt, etc.; di(meth)acrylic acid esters of (poly)alkylene glycols, such as di(meth)acrylic acid ester of ethylene glycol, di(meth)acrylic acid ester of diethylene glycol, di(meth)acrylic acid ester of triethylene glycol, di(meth)acrylic acid ester of polyethylene glycol, di(meth)acrylic acid ester of propylene glycol, di (meth)acrylic acid ester of dipropylene glycol, and di(meth)acrylic acid ester of tripropylene glycol; poly(meth)acrylic acid esters, such as trimethylolpropane tri(meth)acrylic acid ester; (meth)acrylonitrile; vinyl acetate; vinylidene chloride; halogenated vinyl compounds, such as (meth) acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine, (meth)acrylic acid-2-aziridinylethyl; epoxy group-containing vinyl monomers, such as allyl glycidyl ether, (meth)acrylic acid glycidyl ether and (meth)acrylic acid-2-ethyl glycidyl ether; hydroxyl group-containing vinyl monomers, such as (meth)acrylic acid-2-hydroxyethyl, (meth) acrylic acid-2-hydroxypropyl, monoesters of (meth) acrylic acids with polypropylene glycol or polyethylene glycol, and adducts of lactones with (meth)acrylic acid-2-hydroxyethyl; fluorine-containing vinyl monomers, such as fluorine-substituted (meth) acrylic acid alkyl ester; unsaturated carboxylic acids including itaconic acid, crotonic acid, maleic acid, and fumaric acid, salts thereof, (partial)ester compounds thereof, and acid anhydrides thereof; reactive halogen-containing vinyl monomers, such as 2-chloroethyl vinyl ether and monochloro vinyl acetate; amide group-containing vinyl monomers, such as methacrylamide, N-methylol methacrylamide, N-methoxyethyl methacrylamide, N-butoxymethyl methacrylamide, and N-acryloyl morpholine; organic silicon-containing vinyl monomers, such as vinyltrimethoxysilane, γ-methacryloxypropyl trimethoxy silane, allyltrimethoxysilane, trimethoxysilylpropylallylamine, and 2-methoxy ethoxy trimethoxy silane; and in addition to the above compounds, macro monomers in which vinyl groups are polymerized that have a radical polymerizable vinyl group at the terminal thereof. These monomers may be copolymerized, alone or in combination thereof, with the aforementioned (meth)acrylic acid esters.

In the acrylic pressure-sensitive adhesive tape according to the present embodiment, for example, the copolymer of cyclohexyl methacrylate (CHMA) and isobutyl methacrylate (IBMA), that of cyclohexyl methacrylate (CHMA) andisobornylmethacrylate (IBXMA), that of cyclohexyl methacrylate (CHMA) and acryloyl morpholine (ACMO), and that of cyclohexyl methacrylate (CHMA) and diethylacrylamide (DEAA) are preferred as the (meth)acrylic polymer (B) , in terms that an acrylic pressure-sensitive adhesive tape can be provided in which peeling-off property or tearing-off property occurring by heating is improved while the high adhesiveness to a metallic material is being maintained.

As the composition ratio of the copolymer that forms the (meth) acrylic polymer (B), the content of cyclohexyl methacrylate (CHMA) is within a range of 50 to 85% by mass, and preferably within a range of 55 to 75% by mass; and that of isobutyl methacrylate (IBMA), isobornyl methacrylate (IBXMA), acryloyl morpholine (ACMO), or diethylacrylamide (DEAA) is within a range of 15 to 50% by mass, and preferably within a range of 25 to 45% by mass.

In addition, a functional group that is reactive with an epoxy group or isocyanate group may be introduced into the (meth)acrylic polymer (B). Examples of such a functional group include a hydroxyl group, carboxyl group, amino group, amide group, and mercapto group. In producing the (meth) acrylic polymer (B), it is preferable to use a monomer having such a functional group.

<Method of Adjusting Molecular Weight of (Meth)Acrylic Polymer (B) >

For the adjustment of the molecular weight of the (meth)acrylic polymer (B), a chain transfer agent can be used during the polymerization of the polymer (B). Examples of the chain transfer agent to be used include: compounds having a mercapto group, such as octyl mercaptan, dodecyl mercaptan, and t-dodecyl mercaptan, etc.; thioglycolic acid, thioglycolic acid ethyl, thioglycolic acid propyl, thioglycolic acid butyl, thioglycolic acid t-butyl, thioglycolic acid 2-ethylhexyl, thioglycolic acid octyl, thioglycolic acid decyl, thioglycolic acid dodecyl, thioglycolic acid ester of ethylene glycol, thioglycolic acid ester of neopentyl glycol, and thioglycolic acid ester of pentaerythritol. Among them, thioglycolic acids can be preferably used.
The use amount of the chain transfer agent is not particularly limited, but the agent is usually contained in an amount within a range of 0.1 to 20 parts by mass based on 100 parts by mass of the acrylic monomer, preferably in an amount within a range of 0.2 to 15 parts by mass, and more preferably in an amount within a range of 0.3 to 10 parts by mass. By adjusting the addition amount of the chain transfer agent as stated above, the (meth) acrylic polymer (B) having a preferred molecular weight can be obtained.
The heat-expandable microsphere (C) will be expanded or foamed by heating. The property that the pressure-sensitive adhesive layer is disjoined, when heated, from an adherend at the interface between them and is teared off can be obtained by containing the microsphere (C) in the pressure sensitive adhesive composition A. Such a property is obtained by the fact that the pressure-sensitive adhesive layer is expanded and deformed into a concave-convex shape when the microsphere (C) in the pressure-sensitive adhesive composition A has been expanded and/or foamed by heating, and accordingly the pressure-sensitive adhesive layer is peeled off from the adherend at the interface between them. In addition, depending on the type of the material of an adherend, there are sometimes the cases where the adhesive force of the pressure-sensitive adhesive layer is decreased or lost and accordingly the layer is peeled off from the adherend at the interface between them due to the above property that the pressure-sensitive adhesive layer is expanded and deformed when the microsphere (C) in the pressure-sensitive adhesive composition A has been expanded and/or foamed by heating.
A heating treatment can be performed by using, for example, an appropriate heating means, such as hot plate, hot air dryer, near-infrared lamp, and air dryer. It is better that the heating temperature is higher than or equal to the temperature at which the expansion of the microsphere (C) is initiated; however, the temperature can be appropriately set depending on the surface state of an adherend, type of the microsphere (C) , heat resistance property of the adherend, and heating method (heat capacity, heating means, etc.), etc. Heating temperature of 100 to 250˚C for 5 to 90 sec (hot plate, etc.) or for 5 to 15 min (hot air dryer, etc.) is adopted as an ordinary heating treatment condition.
The microsphere (C) to be used in the pressure-sensitive adhesive layer is not particularly limited as far as the microsphere is provided with the property of being expanded and/or foamed by heating, and, for example, a publicly-known thermal foaming agent can be selected and used. Among them, a microencapsulated foaming agent can be preferably used. Examples of such a microencapsulated foaming agent include microspheres in each of which a substance that is easily gasified and expanded by heating, for example, such as isobutane, propane, pentane, or the like, is encapsulated within the shell having elasticity.
The shell of the microsphere (C) is mostly and usually formed with a thermoplastic substance, hot-melt substance, or a substance that bursts by thermal expansion. Examples of the substance that forms the shell of the heat-expandable microspheres include, for example, vinylidene chloride-acrylonitrile copolymer, polyvinyl alcohol, polyvinyl butyral, polymethyl methacrylate, polyacrylonitrile, polyvinylidene chloride, and polysulfone, etc. The microsphere (C) can be produced by a commonly-used method, for example, such as a coacervation method and interface polymerization method, etc.
The thermal foaming agents on the market can also be utilized as the microsphere (C) . Such thermal foaming agents on the market are not particularly limited, and examples of them include, for example, ones: with product names of "Matsumoto Microsphere F-30", "Matsumoto Microsphere F-50", "Matsumoto Microsphere F-80S", and "Matsumoto Microsphere F-85" (all of them are made by Matsumoto Yushi-Seiyaku Co., Ltd.); and with a product name of "Expancel Du" (made by Akzo Nobel Surface Chemistry AB), etc.
The average size of the microsphere (C) is generally within a range of approximately 1 to 80 μm in terms of dispersibility and thin-film forming property, and preferably within a range of approximately 3 to 50 μm.
In order to effectively reduce the adhesive force of the pressure-sensitive adhesive layer by heating, it is preferable that the microsphere (C) has moderate strength such that the microsphere does not burst until the coefficient of volume expansion becomes five times or more, in particular, ten times or more. If the microsphere (C) that will burst at a low coefficient of volume expansion or the microsphere (C) that is not microencapsulated is used, the adhesive area between the pressure-sensitive adhesive layer and an adherend is not sufficiently reduced, and hence there are sometimes the cases where good peeling-off property cannot be obtained or where the disjoining property and or tearing-off property occurring by heating, for example, the property that the pressure-sensitive adhesive layer is teared off at the interface between the layer and a release film layer is reduced.

Although the content of the microsphere (C) is changed depending on the type thereof, it is contained in an amount within a range of, for example, 10 to 200 parts by mass based on 100 parts by mass of the mixture of the acrylic polymer (A) and the (meth)acrylic polymer (B), which form the pressure-sensitive adhesive composition A, preferably in an amount within a range of 20 to 125 parts by mass, and more preferably in an amount within a range of approximately 25 to 100 parts by mass. If the content of the microsphere (C) is below ten parts by mass, the pressure-sensitive adhesive layer is not sufficiently expanded and deformed after being heated, and hence there is the fear that disjoining and tearing off occurring by heating may not be generated. On the other hand, if the content thereof exceeds 200 parts by mass, the cohesive failure of the pressure-sensitive adhesive layer is likely to occur.

Examples of other microspheres (C) to be used in the pressure-sensitive adhesive composition A include, for example, various inorganic and organic foaming agents. Typical examples of inorganic foaming agents include: ammonium carbonate, ammonium hydrogen carbonate, sodium hydrogen bicarbonate, ammonium nitrite, sodium boron hydride, and azides, etc. Typical examples of organic foaming agents include: water; fluorinated alkanes, such as trichloromonofluoromethane, and dichloromonofluoromethane; azo compounds, such as azobisisobutyronitrile, azodicarbonamide, and barium azodicarboxylate; hydrazine compounds, such as p-toluenesulfonylhydrazide, diphenylsulfone-3,3'-disulfonylhydrazide,
4,4'-oxybis(benzenesulphonyl hydrazide), and allylbis(sulfonyl hydrazide), etc.; semicarbazide compounds, such as p-tolylenesulfonyl semicarbazide and
4,4'-oxybis(benzenesulfonyl semicarbazide), etc.; triazole compounds, such as 5-morpholyl-1,2,3,4-thiatriazole, etc.; and
N-nitroso compounds, such as N,N'-dinitroso pentamethylene tetramine and N, N' -dimethyl-N, N'-dinitroso terephthalamide, etc. The heat foaming agents can be used alone or in combination of two or more thereof. In addition, the pressure-sensitive adhesive composition A may contain a foaming auxiliary agent, if needed.

Various additives may be contained in the pressure-sensitive adhesive composition A. Examples of such additives include, for example: cross-linking agents, such as isocyanate cross-linking agent and epoxy cross-linking agent, etc.; tackifiers, such as rosin derivative resin, polyterpene resin, petroleum resin, and oil soluble phenol resin, etc.; plasticizer; filler; anti-aging agent; and surfactants, etc.

The method of forming the pressure-sensitive adhesive layer is not particularly limited, but is formed by, for example, coating the pressure-sensitive adhesive composition A on an appropriate support body, such as a separator or substrate to form a pressure-sensitive adhesive layer, and then by drying or curing the coated layer (with heat or active energy ray), if needed. In curing the coated layer with an active energy ray (light curing), a photo-polymerization reaction is inhibited by the oxygen in the air; accordingly, it is preferable to block the oxygen by laminating an appropriate support body, such as a separator or substrate, on the pressure-sensitive adhesive layer, or by performing light curing under nitrogen atmosphere. The appropriate support body to be used in forming the pressure-sensitive adhesive layer may be peeled off at an appropriate timing during the formation of the acrylic pressure-sensitive adhesive tape or peeled off when the produced acrylic pressure-sensitive is used.

The thickness of the pressure-sensitive adhesive layer can be appropriately selected in accordance with the use purpose of the acrylic pressure-sensitive adhesive tape or the reducing property of the adhesive force occurring by heating; however, it is preferable to make the thickness thereof to be greater than or equal to the maximum size of the microsphere (C) in order to maintain the smoothness of the surface of the pressure-sensitive adhesive layer. The thickness is preferably within a range of, for example, 1 to 300 $\mu$m, more preferably within a range of 10 to 250 $\mu$m, and still more preferably within a range of approximately 30 to 200 $\mu$m. If the thickness thereof is too small, there are sometimes the cases where the adhesive force enough for holding an adherend cannot be obtained.

According to the acrylic pressure-sensitive adhesive tape described above, peeling-off property or tearing-off property occurring by heating can be improved while the adhesiveness to a metallic material, such as stainless plate, etc., is being improved. More specifically, when a joined portion is to be disjoined and teared off, the portion can be easily disjoined and teared off by heating (for example, heating treatment performed at 130˚C for 10 minutes) while high adhesiveness (adhesive force occurring when the joined portion, which has been made by being left at 23˚C for 30 minutes after adhered to a SUS 304 BA plate that is an adherend, is peeled off in 180˚ peeling-off direction at a tension speed of 50 mm/min, is 20 N/25 mm or more, and preferably 30 N/25 mm or more) is being maintained in a joined state.

(Embodiment 2)

Fig. 1 is a schematic sectional view illustrating the configuration of an acrylic pressure-sensitive adhesive tape 10 according to Embodiment 2. The acrylic pressure-sensitive adhesive tape 10 comprises: a core layer 20; and a surface layer 30 provided on one side of the core layer 20. It is preferable to have a separator (release film) on the surface layer 30 for the purpose of protecting the adhesive surface of the surface layer 30.

(Core Layer)

The core layer 20 is formed of a pressure-sensitive adhesive composition B, and a fine particle and/or a bubble that are contained, if needed, in the pressure-sensitive adhesive composition B. Hereinafter, each component of the core layer 20 will be described in detail.

[Pressure-Sensitive Adhesive Composition B]

An acrylic polymer (D) having the same materials as those in the acrylic polymer A contained in the pressure-sensitive adhesive composition A used in Embodiment 1, can be used as the pressure-sensitive adhesive composition B that forms the core layer 20.

[Fine Particle]

In the present invention, fine particles (E) can be added in the acrylic polymer (D) that forms the core layer. The fine particles have operational effects of improving the shear adhesive force and processability of the acrylic pressure-sensitive adhesive tape 10.

Examples of the fine particles include: metallic particles, such as copper, nickel, aluminum, chromium, iron, and stainless steel, etc., and metal oxide particles thereof; carbide particles, such as silicon carbide, boron carbide, and carbon nitride, etc., and nitride particles, such as aluminum nitride, silicon nitride, and boron nitride, etc. ; ceramic particles represented by oxides, such as glass, alumina, and zirconium, etc.; inorganic fine particles, such as calcium carbide, aluminum hydroxide, glass, and silica, etc.; natural material particles, such as volcanic Shirasu and sand, etc.; polymer particles of polystyrene, polymethyl methacrylate, phenol resin, benzoguanamine resin, urea resin, silicone resin, nylon, polyester, polyurethane, polyethylene, polypropylene, polyamide, and polyimide, etc.; organic hollow bodies of vinylidene chloride and acrylic, etc.; and organic spheres, such as nylon bead, acrylic bead, and silicone bead, etc.

Hollow fine particles can be preferably used as the fine particle. Among hollow fine particles, hollow inorganic fine particles can be preferably used in terms of the efficiency of the polymerization using an ultraviolet reaction and weight. Examples of the hollow inorganic fine particles include: glass balloons, such as hollow glass balloons, etc.; hollow balloons made of metallic compound, such as hollow alumina balloons, etc.; and hollow balloons made of porcelain, such as hollow ceramic balloons, etc. High adhesive force can be improved without impairing other properties such as shear force and holding force, etc., by using the above hollow glass balloons.

Examples of the hollow glass balloons include, for example, ones: with a product name of "Glass Microballoon" (made by FUJI SILYSIA CHEMICAL LTD.); with product names of "CEL-STAR Z-20" "CEL-STAR Z-27" "CEL-STAR CZ-31T" "CEL-STAR Z-36" "CEL-STAR Z-39" "CEL-STAR T-36" and "CEL-STAR PZ-6000" (each of them is made by Tokai Kogyo Co., Ltd.); and with a product name of "SILUX FINE BALLOON" (made by FINE-BALLOON Ltd.), etc.

The size of the fine particle (average particle size) is not particularly limited, but can be selected from a range of, for example, 1 to 500 $\mu$m, preferably from a range of 5 to 200 $\mu$m, and more preferably from a range of 10 to 150 $\mu$m.

The specific gravity of the fine particle is not particularly limited, but can be selected from a range of, for example, 0.1 to 1.8 g/cm$^3$, preferably from a range of 0.2 to 1.5 g/cm$^3$, and more preferably from a range of 0.2 to 0.5 g/cm$^3$.

If the specific gravity of the fine particle is smaller than 0.1 g/cm$^3$, floating of the fine particles becomes remarkable when combining and mixing the fine particles into the acrylic adhesive, and accordingly there are sometimes the cases where it is difficult to uniformly scatter the fine particles. In addition, because the strength of the glass becomes low, it will easily crack. Conversely, if the specific gravity thereof is larger than 1.8 g/cm$^3$, the transmission rate of an ultraviolet ray is decreased, and accordingly there is the fear that the efficiency of the ultraviolet reaction may be decreased. In addition, because the weight of the acrylic adhesive becomes large, the workability becomes poor.

The use amount of the fine particles is not particularly limited. If the use amount thereof is below, for example, 10% by volume based on the whole volume of the core layer 20, the effect of the addition of the fine particles is low. On the other hand, if the use amount thereof exceeds 50% by volume based on the whole volume of the core layer 20, the adhesive force is decreased.

[Bubble]

In the present invention, bubble s (F) can be added in the acrylic polymer (D) that forms the core layer. By containing the bubbles (F) in the core layer 20, the acrylic pressure-sensitive adhesive tape 10 can exhibit good adhesiveness to a curved surface and concave-convex surface, and also exhibit good resistance to resilience.

It is desirable that the bubbles contained in the core layer 20 are basically closed-cell type bubbles, but closed-cell type bubbles and interconnected-cell type bubbles may coexist.

Although the bubble usually has a spherical shape (in particular, a true spherical shape), the shape does not necessarily have to be a true spherical shape and accordingly there may be concavities and convexities on the sphere. The average bubble size (diameter) of the bubble is not particularly limited, but can be selected from a range of, for example, 1 to 1000 $\mu$m, preferably from a range of 10 to 500 $\mu$m, and more preferably from a range of 30 to 300 $\mu$m.

A gas component contained in the bubble (gas component of which the bubble is formed; sometimes referred to as a "bubble-forming gas") is not particularly limited, but various gas components, such as inactive gases including nitrogen, carbon dioxide, and argon, etc., and air, etc. When a polymerization reaction is performed in a state where a bubble-forming gas is contained, it is important that the bubble-forming gas does not hamper the reaction. Nitrogen can be preferably used as a bubble-forming gas in terms of not hampering a polymerization reaction and cost.

The amount of the bubbles contained in the core layer 20 is not particularly limited, but can be appropriately selected in accordance with the use purpose thereof. For example, the use amount thereof is within a range of 5 to 50% by volume based on the whole volume of the core layer 20 that contains bubbles, and preferably within a range of 8 to 40% by volume. If the mixing amount of the bubbles is below 5% by volume, the effect of mixing the bubbles cannot be obtained. Conversely, if the mixing amount thereof exceeds 50% by volume, there occur the bubbles each penetrating through the core layer 20, and accordingly the adhesive performance and the appearance are decreased.

In the core layer 20 containing bubbles, the form in which the bubbles are formed is not particularly limited. The core layer 20 containing bubbles can be formed, for example, in the following ways: (1) the core layer 20 containing bubbles can be formed by using the core layer 20 in which a gas component that will form bubbles (a bubble-forming gas) has been mixed beforehand; and (2) the core layer 20 in which bubbles are formed can be formed by mixing a foaming agent into the core layer 20. When the latter way (2) is used, the foaming agent is not particularly limited, but can be appropriately selected from publicly-known foaming agents. For example, heat-expandable micro-spheres can be used as a foaming agent.

When the bubbles (F) are contained in the acrylic polymer (D), it is not necessarily needed that the aforementioned fine particles (E) are contained therein. Conversely, when the fine particles (E) are contained in the acrylic polymer (D), it is not necessarily needed that the bubbles (F) are contained therein. When the fine particles (E) and the bubbles (F) are contained in the acrylic polymer (D), both an operational advantage by adding the fine particles (E) and that by adding the bubbles (F) can be obtained.

<Other Components>

Besides the aforementioned components, a thickener, a thixotropic agent, and fillers, etc., may be added if needed. Examples of the thickener include acrylic rubber, epichlorohydrin rubber, and butyl rubber, etc. Examples of the thixotropic agent include colloid silica and polyvinylpyrrolidone, etc. Examples of the fillers include calcium carbonate, titanium oxide, and clay, etc. Other than those, a plasticizer, anti-aging agent, antioxidant, etc. may be appropriately added. Additives to be added should not be limited thereto.

(Surface Layer)

The surface layer 30 is the same as the pressure-sensitive adhesive layer used in the acrylic pressure-sensitive adhesive tape according to Embodiment 1. That is, the acrylic pressure-sensitive adhesive tape according to Embodiment 2 is formed of a plurality of pressure-sensitive adhesive layers, in which a pressure-sensitive adhesive layer having easy tearing-off property is provided as the surface layer, while the acrylic pressure-sensitive adhesive tape according to Embodiment 1 is formed of a single pressure-sensitive adhesive layer.

(Layer Thickness Ratio)

The thickness ratio of the surface layer 30 to the total of the core layer 20 and the surface layer 30 is preferably within a range of 8 to 20%. The total thickness of the acrylic pressure-sensitive adhesive tape (total of the thickness of the core layer 20 and that of the surface layer 30) is not particularly limited, but is within a range of 0.4 mm to 4.0 mm, and preferably within a range of 0.5 mm to 2.5 mm.

(Method of forming multi-layers)

The method of forming the core layer and the surface layer is not particularly limited, but the methods described below can be used.

(1) Method of forming multi-layers by laminating the surface layer on the core layer after the two layers have been separately cured: this method has the advantage that the accuracy of each layer thickness can be enhanced.
(2) Method of coating the core layer (or surface layer) on the surface layer (or core layer) that has been cured beforehand and then curing the core layer (or surface layer) : in this method, because one layer is coated on another layer that has been cured beforehand, the accuracy of each layer thickness can be enhanced. Further, because one layer can be collectively coated on another layer that has been cured beforehand, the production steps can be simplified and the production time can be shortened.

(3) Method of sequentially or simultaneously coating the core layer (or surface layer) on the coated surface layer (or core layer) and then curing the two layers: in this method, both the surface layer and the core layer can be collectively coated.

In forming each layer, a coating coater, such as a roll coater or comma coater, may be used, or a slot die may be used. In particular, in the aforementioned method (3), a multi-layer slot die for coating each layer may also be used.

According to the acrylic pressure-sensitive adhesive tape 10 described above, peeing-off property or the tearing-off property occurring by heating can be improved while the adhesiveness to a metallic material, such as a stainless plate, etc., is being improved. More specifically, the acrylic pressure-sensitive adhesive tape 10 has the property that the surface layer 30 adhered to an adherend is teared off by heating (for example, heating treatment performed at 130˚C for 10 minutes) while high adhesiveness (adhesive force occurring when a joined portion that has been made by being left at 23˚C for 30 minutes after adhered to a SUS 304 BA plate that is an adherend is peeled off in 180˚ peeling-off direction at a tension seed of 50 mm/min, is 20 N/25 mm or more, and preferably 30 N/25 mm or more) is being maintained in a joined state. Thereby, the surface layer 30 is teared off, and hence the acrylic pressure-sensitive adhesive tape 10 can be peeled off from an adherend.

Examples

Hereinafter, the present invention will be described in detail based on Examples, but the invention should not be limited at all by these Examples.

Table 2 shows the layer configuration and components of the acrylic pressure-sensitive adhesive tape according to each of Examples 1 to 4 and Comparative Examples 1 to 6.

[Table 2]

| | CORE LAYER | | | | SURFACE LAYER | | | | | | | | | | |
| | ACRYLIC POLYMER(C) | FINE PARTICLE | BUBBLE | THICKNESS OF CORE LAYER | ACRYLIC POLYMER (A) | (METH)ACRYLIC POLYMER (B) | | | | HEAT-EXPANDABLE MICROSPHERE | | CROSS-LINKING AGENT | | INITIATOR | | THICKNESS OF SURFACE LAYER |
| | COMPOSITION RATIO (100 PARTS BY MASS) | COMPONENT | PERCENT BY VOLUME BASED ON THE WHOLE CORE LAYER | THICKNESS [μm] | COMPOSITION RATIO (100 PARTS BY MASS) | COMPOSITION RATIO | NUMBER OF PARTS (BASED ON 100 PARTS BY MASS OF ACRYLIC POLYMER) | ACRYLIC OLIGOMER Mw | TYPE | | TYPE | NUMBER OF PARTS [BY MASS] | TYPE | NUMBER OF PARTS [BY MASS] | THICKNESS [μm] |
|---|---|---|---|---|---|---|---|---|---|---|---|---|---|---|---|
| EXAMPLE 1 | 2EHA/AA=90/10 | HOLLOW GLASS MICROSPHERE | APPROXIMATELY 20 | 800 | 2EHA/AA=94/6 | CHMA/IBMA=60/40 | 20 | 3700 | 051DU40 | 30 | TMPTA | 0.20 | IRGACURE 651 | 0 05 | 100 |
| EXAMPLE 2 | 2EHA/AA=90/10 | HOLLOW GLASS MICROSPHERE | APPROXIMATELY 20 | 800 | 2EHA/AA=94/6 | CHMA/IBMA=60/40 | 20 | 3700 | 051DU40 | 30 | DPHA | 0.20 | IRGACURE 651 | 0 05 | 100 |
| EXAMPLE 3 | 2EHA/AA=90/10 | HOLLOW GLASS MICROSPHERE | APPROXIMATELY 20 | 800 | 2EHA/AA=94/6 | CHMA/IBMA=60/40 | 20 | 3700 | 051DU40 | 30 | DPHA | 0 35 | IRGACURE 651 | 0 05 | 100 |
| EXAMPLE 4 | 2EHA/AA=90/10 | HOLLOW GLASS MICROSPHERE | APPROXIMATELY 20 | 800 | 2EHA/AA=94/6 | CHMA/IBMA=60/40 | 20 | 3700 | 051DU40 | 50 | DPHA | 0 35 | IRGACURE 651 | 0 05 | 100 |
| COMPARATIVE EXAMPLE 1 | 2EHA/AA=90/10 | HOLLOW GLASS MICROSPHERE | APPROXIMATELY 20 | 800 | 2EHA/AA=90/10 | – | – | – | 051DU40 | 30 | TMPTA | 0 20 | IRGACURE 651 | 0 05 | 100 |
| COMPARATIVE EXAMPLE 2 | 2EHA/AA=90/10 | HOLLOW GLASS MICROSPHERE | APPROXIMATELY 20 | 800 | 2EHA/AA=90/10 | – | – | – | 051DU40 | 30 | DPHA | 0 16 | IRGACURE 651 | 0 05 | 100 |
| COMPARATIVE EXAMPLE 3 | 2EHA/AA=90/10 | HOLLOW GLASS MICROSPHERE | APPROXIMATELY 20 | 800 | 2EHA/AA=90/10 | – | – | – | 051DU40 | 30 | DPHA | 0 20 | IRGACURE 651 | 0 05 | 100 |
| COMPARATIVE EXAMPLE 4 | 2EHA/AA=90/10 | HOLLOW GLASS MICROSPHERE | APPROXIMATELY 20 | 800 | 2EHA/AA=90/10 | – | – | – | 051DU40 | 30 | DPHA | 0 24 | IRGACURE 651 | 0 05 | 100 |
| COMPARATIVE EXAMPLE 5 | 2EHA/AA=90/10 | HOLLOW GLASS MICROSPHERE | APPROXIMATELY 20 | 800 | 2EHA/AA=90/10 | – | – | – | 051DU40 | 30 | DPHA | 0 35 | IRGACURE 651 | 0 05 | 100 |
| COMPARATIVE EXAMPLE 6 | 2EHA/AA=90/10 | HOLLOW GLASS MICROSPHERE | APPROXIMATELY 20 | 800 | 2EHA/AA=90/10 | – | – | – | 051DU40 | 50 | DPHA | 0 35 | IRGACURE 651 | 0 05 | 100 |

The abbreviations in Table 2 represent the following compounds.

2EHA: 2-ethylhexyl acrylate
AA: Acrylic acid
CHMA: Cyclohexyl methacrylate
IBMA: Isobutyl methacrylate
TMPTA: Trimethylolpropane triacrylate
DPHA: Dipentaerythritol hexaacrylate
051DU40: Thermal-expandable microsphere 051DU40 (made by Expancel Co.)

(A: Preparation of Acrylic Polymer Syrup 1 (2-EHA/AA=94/6))

After a photo-polymerization initiator (product name of "IRGACURE 651", made by Ciba Speciality Chemicals Inc. , 0.07 parts by mass) and a photo-polymerization initiator (product name of "IRGACURE 184", made by Ciba Speciality Chemicals Inc. , 0. 07 parts by mass) were combined into a monomer mixture that was formed with 2- ethylhexyl acrylate (94 parts by mass) and acrylic acid (6 parts by mass), ultraviolet rays were radiated until the viscosity (BH viscometer, No. 5 rotor, 10 rpm, measurement temperature: 30˚C) became 15 Pa*s to obtain a partially polymerized composition (acrylic polymer syrup 1).

(A: Preparation of Acrylic Polymer Syrup 2 (2-EHA/AA=90/10))

After a photo-polymerization initiator (product name of "IRGACURE 651", made by Ciba Speciality Chemicals Inc. , 0. 07 parts by mass) and a photo-polymerization initiator (product name of "IRGACURE 184", made by Ciba Speciality Chemicals Inc. , 0.05 parts by mass) were combined into a monomer mixture that was formed with 2- ethylhexyl acrylate (90 parts by mass) and acrylic acid (10 parts by mass) , ultraviolet rays were radiated until the viscosity (BH viscometer, No. 5 rotor, 10 rpm, measurement temperature: 30˚C) became 15 Pa*s to obtain a partially polymerized composition (acrylic polymer syrup 2).

(B: Preparation of (meth)acrylic polymer (CHMA/IBMA=60/40))

After cyclohexyl methacrylate (CHMA 60 parts by mass), isobutyl methacrylate (IBMA, 40 parts by mass), and thioglycolic acid (4.0 parts by mass) were combined together, nitrogen gas was blown thereinto to remove dissolved oxygen. Tg of the oligomer (CHMA/IBMA = 60/40), which was calculated from the aforementioned Fox equation, was 51˚C. Subsequently, when the mixture was heated to 90˚C, Perhexyl 0 (made by NOF CORPORATION, 0.005 parts by mass) and Perhexyl D (made by NOF CORPORATION, 0.01 parts by mass) were combined. Further, after the mixture was stirred at 90˚C for one hour, the mixture was heated to 150˚C over one hour to be stirred at the temperature for one hour. Subsequently, the mixture was heated to 170˚C over one hour to be stirred at the temperature for 60 minutes.
Subsequently, the mixture was depressurized at 170˚C and then stirred for one hour to remove the residual monomers, so that the (meth)acrylic polymer (B) was obtained. The molecular weight of the obtained (meth)acrylic polymer (B) was 3700.
Hereinafter, the method of forming the acrylic pressure-sensitive adhesive tape according to Example 1 will be described.

(Preparation of Acrylic Pressure-Sensitive Adhesive Composition 1 (Composition for Core Layer))

After 1,6-hexanediol diacrylate (0.08 parts by mass) was added in the aforementioned acrylic polymer syrup 2 (100 parts by mass), hollow galas microspheres (product name of "CEL-STAR Z-27", made by Tokai Kogyo Co., Ltd.) were further added in an amount of 9.5 parts by mass based on the acrylic polymer syrup.
A precursor of the pressure-sensitive adhesive composition was prepared by adding a fluorochemical surfactant (product name of "Surflon S-393" (made by AGC SEIMI CHEMICAL CO., LTD.; acrylic copolymer having a polyoxyethylene group and a fluorinated hydrocarbon group in its side chain; MW = 8300, 0.5 parts by mass) into the above syrup into which the hollow glass microspheres had been added. In the precursor of the pressure-sensitive adhesive composition, the ratio of the volume thereof to the whole volume of the precursor of the pressure-sensitive adhesive composition was approximately 26% by volume.
The precursor of the pressure-sensitive adhesive composition was introduced between minute teeth on the stator in which the teeth are provided on a disk having a through-hole at its center, and teeth on the rotor that faces the stator having the teeth in which the teeth that are minute in the same way as those on the stator are provided on a disk, in an apparatus provided with the stator and rotor. While rotating the rotor at high speed, nitrogen gas was introduced into the precursor of the pressure-sensitive adhesive composition through the through-hole to mix bubbles into the precursor thereof. Thereby, the acrylic pressure-sensitive adhesive composition 1 for the core layer was obtained. The bubbles were mixed such that the ratio of the volume of the bubbles to the whole volume of the acrylic pressure-sensitive adhesive composition 1 was approximately 20% by mass.

(Preparation of Acrylic Pressure-Sensitive Adhesive Composition 2 (Composition for Surface Layer))

The acrylic pressure-sensitive adhesive composition 2 for the surface layer was obtained by combining TMPTA (0.20 parts by mass), the (meth) acrylic polymer (B) obtained above (20 parts by mass), IRGACURE 651 (0.05 parts by mass), and 051DU40 as heat-expandable microspheres, into the aforementioned acrylic polymer syrup 1 (100 parts by mass).

(Production of Core Layer)

The acrylic pressure-sensitive adhesive composition 1 was coated on the surface of a polyester film (release liner made of polyester) having a thickness of 38 $\mu$m, one surface of the polyester film, i.e., the above surface being subjected to a release treatment, with a roll coater such that the thickness of the coating was 800 $\mu$m. Subsequently, the surface of a polyester release liner that has been subjected to a release treatment was attached to the other surface of the coated acrylic pressure-sensitive adhesive composition 1 such that the surface that has been subjected to a release treatment faced the one surface of the acrylic pressure-sensitive adhesive composition 1. Subsequently, ultraviolet rays were radiated, for three minutes, onto both the surfaces of the acrylic pressure-sensitive adhesive composition 1 using black light lamps each having a lighting intensity of 5 mW/cm$^2$. Thus, a core layer made of the acrylic pressure-sensitive adhesive layer having a thickness of 800 $\mu$m was obtained.

(Production of Surface Layer)

The aforementioned acrylic pressure-sensitive adhesive composition 2 was coated on the surface of a polyester film (release liner made of polyester) having a thickness of 38 $\mu$m, one surface of the polyester film, i.e., the above surface being subjected to a release treatment, with a roll coater such that the thickness of the coating was 100 $\mu$m. Subsequently, the surface of a polyester release liner of the same type that has been subjected to a release treatment was attached to the other surface of the coated acrylic pressure-sensitive adhesive composition 2 such that the surface that has been subjected to a release treatment faced the one surface of the acrylic pressure-sensitive adhesive composition 2. Subsequently, ultraviolet rays were radiated, for three minutes, onto both the surfaces of the acrylic pressure-sensitive adhesive composition 2 using black light lamps each having a lighting intensity of 5 mW/cm$^2$. Thus, a surface layer made of the acrylic
pressure-sensitive adhesive layer having a thickness of 100 $\mu$m was obtained.

(Attachment of Core Layer/Surface Layer)

The release liner attached to the other surface of each of the core layer and surface layer, which had been obtained in the aforementioned procedures, was peeled off, and then the respective adhesive surfaces thereof were attached together to obtain the acrylic pressure-sensitive adhesive tape according to Example 1.

(Examples 2 to 4)

The basic method of producing the acrylic pressure-sensitive adhesive tape according to each of Examples 2 to 4 is the same as in Example 1, except for the type and the number of parts of the cross-linking agent.

(Comparative Examples 1 to 6)

The basic method of producing the acrylic pressure-sensitive adhesive tape according to each of Comparative Examples 1 to 6 is the same as in Example 1. However, the type and the number of parts of the acrylic polymer used in the surface layer and the cross-linking agent were appropriately changed as shown in Table 1. In addition, the acrylic pressure-sensitive adhesive tape according to each of Comparative Examples 1 to 6 does not contain an acrylic oligomer in the surface layer.

(Test Method)

[180˚ Peeling-Off Test]

(Adherend: SUS 304 BA Plate)

A SUS 304 plate was prepared as an adherend. The surface of the SUS plate was beforehand washed with ethanol after ultrasonic cleaning (ethanol/toluene mixed solvent), and left for 30 minutes or longer. The release liner on the core layer side of the acrylic pressure-sensitive adhesive tape according to each of Examples and Comparative Examples was peeled off, and the acrylic pressure-sensitive adhesive tape was backed up with polyethylene terephthalate (PET substrate) having a thickness of 50 $\mu$m. Thereafter, specimens of the acrylic pressure-sensitive adhesive tapes were produced by cutting the tapes into a size of 25 mm in width x 60 mm in length. On the other hand, the release film on one side of each of the acrylic pressure-sensitive adhesive tapes was peeled off to expose the surface layer thereof, so that the tape was pressure-bonded to the SUS 304 BA plate by one reciprocation of a 5-kg roller. The specimens thus obtained were left at room temperature (23˚C) for 30 minutes. Thereafter, the initial adhesive force (unit: N/25 mm) to the SUS 304 BA plate was measured by peeling off the acrylic pressure-sensitive adhesive tape in the 180˚ peeling-off direction at a tension speed of 50 mm/min using a tensile tester.

[Table 3]

| | EXAMPLE 1 | EXAMPLE 2 | EXAMPLE 3 | EXAMPLE 4 | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|---|---|---|
| ADHESIVE FORCE (RT*30m n ) (N/25mm) | 41 | 47 | 50 | 33 | 23 | 24 | 26 | 27 | 22 | 16 |

[Tearing-Off Property]

A SUS 304 BA plate was prepared and subjected to ultrasonic cleaning (ethanol / toluene mixed solvent). The release liner on the core layer side of the acrylic pressure-sensitive adhesive tape (size: 25 mm × 50 mm) of each of Examples and Comparative Examples was peeled off, and the acrylic pressure-sensitive-sensitive adhesive tape was backed up with polyethylene terephthalate (PET substrate) having a thickness of 50 $\mu$m. On the other hand, the release film on one side of each of the acrylic pressure-sensitive adhesive tapes was peeled off to expose the surface layer thereof, so that the tape was pressure-bonded to the SUS 304 BA plate by one reciprocation of a 5-kg roller. Thirty minutes later after the press-bonding, the acrylic pressure-sensitive adhesive tape and the SUS 304 BA plate were placed into a small chamber, the temperature of which had been preset to 130˚C. They were taken out ten minutes later such that it was confirmed in the state whether the acrylic pressure-sensitive adhesive tape was naturally peeled off from the SUS 304 plate. The results of the initial tearing-off property are shown in Table 4. In Table 4, "0" shows the case where the natural peeling-off occurs, while "×" shows the case where the natural peeling-off does not occur, that is, the acrylic pressure-sensitive adhesive tape is still adhered to the SUS 304 plate.

[Table 4]

| | EXAMPLE 1 | EXAMPLE 2 | EXAMPLE 3 | EXAMPLE 4 | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|---|---|---|
| TEARING-OFF PROPERTY | ○ | ○ | ○ | ○ | × | × | × | × | × | × |

As shown from the above results, the acrylic pressure-sensitive adhesive tape according to the present Examples can be easily teared off from an adherend because the adhesive force thereof is reduced when peeled off by heating, while strong adhesive force is being maintained when joined to the adherend.

The present invention should not be limited to the aforementioned embodiments, and various modifications, such as design modifications, can be made with respect to the above embodiments based on the knowledge of those skilled in the art, and an embodiment with such a modification can fall within the scope of the present invention.

For example, the surface layer is provided on one side of the core layer in the acrylic pressure-sensitive adhesive tape according to the above Embodiment 2; however, the above surface layers may be provided on both sides thereof.

In addition, the core layer contains the pressure-sensitive adhesive composition B, a fine particle, and a bubble in the acrylic pressure-sensitive adhesive tape according to the above Embodiment 2; however, the core layer may be formed only of the pressure-sensitive adhesive composition B.

**Claims**

1.  A pressure-sensitive adhesive composition comprising:

    an acrylic polymer (A);
    a (meth)acrylic polymer (B) whose mass average molecular weight (Mw) is such that $1000 \leq Mw < 30000$; and
    a heat-expandable microsphere (C).

2.  The pressure-sensitive adhesive composition according to claim 1, wherein
    the acrylic polymer (A) contains the structural unit of a (meth)acrylic acid alkyl ester as a major component.

3.  An acrylic pressure-sensitive adhesive tape comprising
    a pressure-sensitive adhesive layer containing the pressure-sensitive adhesive composition according to claim 1 or claim 2.

4.  An acrylic pressure-sensitive adhesive tape comprising:

    a core layer; and
    a surface layer provided on one side of the core layer or on each of the sides of the core layer, wherein
    the core layer contains an acrylic polymer (D), and wherein
    the surface layer contains the pressure-sensitive adhesive composition according to claim 1 or claim 2.

5.  The acrylic pressure-sensitive adhesive tape according to claim 4, wherein
    the core layer further contains a fine particle (E) and/or a bubble (F).

6.  The acrylic pressure-sensitive adhesive tape according to claim 4 or claim 5, wherein
    the adhesive force occurring when, after the tape has been left at 23°C for 30 minutes after adhered to a SUS 304 BA plate that is an adherend, the tape is peeled off in 180° peeling-off direction at a tension speed of 50 mm/min, is 20 N/25 mm or more.

Fig. 1

30

20

10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5717030 B
- US 4223067 A
- JP 7048549 A
- JP 2001212900 A
- JP 2002088320 A
- JP 2002003800 A
- JP 2002121505 A
- JP 2004018761 A
- JP 2008120903 A